# FASCICULE DE BREVET EUROPEEN

(11) **EP 3 327 831 B1**
(45) Date de publication et mention de la délivrance du brevet: **20.02.2019**
(21) Numéro de dépôt: 17203586.7
(22) Date de dépôt: 24.11.2017
(51) Int. Cl.: H01M 4/04, H01M 4/136, H01M 4/1397, H01M 4/38, H01M 4/58, H01M 4/02, H01M 4/66, H01M 10/052

(54) **PROCEDE DE FABRICATION D'UNE ELECTRODE POSITIVE POREUSE POUR ACCUMULATEUR ELECTROCHIMIQUE LITHIUM-SOUFRE**
VERFAHREN ZUR HERSTELLUNG EINER PORÖSEN POSITIVEN ELEKTRODE FÜR EINE LITHIUM-SCHWEFEL-BATTERIE
METHOD OF PREPARING A POROUS POSITIVE ELECTRODE FOR A LITHIUM-SULFUR BATTERY

(30) Priorité: 28.11.2016 FR 1661583
(43) Date de publication de la demande: 30.05.2018
(73) Titulaire: Commissariat à l'énergie atomique et aux énergies alternatives, 75015 Paris (FR)
(72) Inventeur: BARCHASZ, Céline, 38600 FONTAINE (FR); BOLLOLI, Marco, 38100 GRENOBLE (FR); CLAUDEL, Fabien, 38400 SAINT MARTIN D'HERES (FR); VINCENT, Rémi, 38000 GRENOBLE (FR)
(74) Mandataire: Brevalex

(56) Documents cités:
- WO-A1-2016/009147
- FR-A5- 2 119 517
- US-A1- 2015 171 416

## Description

### DOMAINE TECHNIQUE

La présente invention a trait à un procédé de préparation d'une électrode positive poreuse pour accumulateur électrochimique lithium-soufre.

Le domaine général de l'invention peut ainsi être défini comme celui des dispositifs de stockage d'énergie, en particulier celui des accumulateurs électrochimiques au lithium et, encore plus particulièrement, des accumulateurs électrochimiques au lithium-soufre.

### ÉTAT DE LA TECHNIQUE ANTÉRIEURE

Les dispositifs de stockage d'énergie sont classiquement des accumulateurs électrochimiques fonctionnant sur le principe de cellules électrochimiques aptes à délivrer un courant électrique grâce à la présence dans chacune d'entre elles d'un couple d'électrodes (respectivement, une électrode positive et une électrode négative) séparé par un électrolyte, les électrodes comprenant des matériaux spécifiques aptes à réagir selon une réaction d'oxydo-réduction, moyennant quoi il y a production d'électrons à l'origine du courant électrique et productions d'ions qui vont circuler d'une électrode à l'autre par le biais d'un électrolyte.

Des accumulateurs souscrivant à ce principe actuellement les plus usités sont les suivants :
*les accumulateurs Ni-MH utilisant de l'hydrure métallique et de l'oxyhydroxyde de nickel comme matériaux d'électrode ;
*les accumulateurs Ni-Cd utilisant du cadmium et de l'oxyhydroxyde de nickel comme matériaux d'électrode ;
*les accumulateurs Acide-Plomb utilisant du plomb et de l'oxyde de plomb PbO₂ comme matériaux d'électrode ; et
*les accumulateurs au lithium, tels que les accumulateurs lithium-ion, utilisant classiquement, en tout ou partie, des matériaux lithiés comme matériaux d'électrode.

Du fait que le lithium est un élément solide particulièrement léger et présente un potentiel électrochimique particulièrement faible, les accumulateurs au lithium ont détrôné largement les autres accumulateurs mentionnés ci-dessus du fait de l'amélioration continue des performances des accumulateurs Li-ion en termes de densité d'énergie. En effet, les accumulateurs lithium-ion permettent d'obtenir des densités d'énergie massique et volumique (pouvant atteindre aujourd'hui près de 300 Wh.kg⁻¹) nettement supérieures à celles des accumulateurs Ni-MH et Ni-Cd (pouvant aller de 50 et 100 Wh.kg⁻¹) et Acide-plomb (pouvant aller de 30 à 35 Wh.kg⁻¹). Qui plus est, les accumulateurs Li-ion peuvent présenter une tension nominale de cellule supérieure à celle des autres accumulateurs (par exemple, une tension nominale de l'ordre de 3,6 V pour une cellule mettant en oeuvre comme matériaux d'électrode le couple LiCoO₂/graphite contre une tension nominale de l'ordre de 1,5 V pour les autres accumulateurs susmentionnés). Ces systèmes présentent également une faible autodécharge et une durée de vie élevée (allant de 500 à 1000 cycles, par exemple).

De par leurs propriétés intrinsèques, les accumulateurs Li-ion s'avèrent donc particulièrement intéressants pour les domaines où l'autonomie est un critère primordial, tel que cela est le cas des domaines de l'informatique, de la vidéo, de la téléphonie, des transports tels que les véhicules électriques, les véhicules hybrides, ou encore des domaines médicaux, spatiaux, de la microélectronique. Toutefois, la technologie des accumulateurs lithium-ion voit aujourd'hui ses performances plafonner.

Actuellement, une nouvelle technologie d'accumulateur à base de lithium se profile comme une alternative prometteuse, cette technologie étant la technologie lithium/soufre, dans laquelle l'électrode positive comprend, comme matériau actif, du soufre élémentaire ou un dérivé du soufre, tel que du sulfure de lithium ou un polysulfure de lithium.

L'utilisation du soufre, comme matériau actif, d'une électrode positive est particulièrement attractive, car le soufre présente une capacité spécifique théorique très élevée pouvant être jusqu'à plus de 10 fois supérieure à celle obtenue pour des matériaux conventionnels d'électrode positive (de l'ordre de 1675 mAh/g au lieu de 140 mAh/g pour LiCoO₂). Qui plus est, le soufre est présent, de manière abondante, sur la planète et se caractérise de ce fait par des coûts faibles. Enfin, il est peu toxique. Toutes ces qualités contribuent à le rendre particulièrement attractif en vue d'une mise en place à grande échelle, notamment pour les véhicules électriques, ce d'autant plus que les accumulateurs lithium/soufre peuvent permettre d'atteindre des densités d'énergie massique pouvant aller de 300 à 600 Wh.g⁻¹.

D'un point de vue fonctionnel, la réaction à l'origine de la production de courant (c'est-à-dire lorsque l'accumulateur est en mode de décharge) met en jeu une réaction d'oxydation du lithium à l'électrode négative qui produit des électrons, qui vont alimenter le circuit extérieur auquel sont reliées les électrodes positive et négative, et une réaction de réduction du soufre à l'électrode positive.

Ainsi, de manière explicite, en processus de décharge, la réaction globale est la suivante :

S₈ + 16Li → 8Li₂S

qui est la somme de la réaction de réduction du soufre à l'électrode positive (Ss + 16e⁻ → 8S²⁻) et de la réaction d'oxydation du lithium à l'électrode négative (Li → Li⁺ + e⁻).

Il est entendu que les réactions électrochimiques inverses se produisent lors du processus de charge.

Comme il ressort de l'équation ci-dessus, la réaction implique un échange de 16 électrons, ce qui justifie la capacité spécifique élevée du soufre (1675 mAh.g⁻¹).

D'un point de vue mécanistique, et sans être lié par la théorie, à l'état initial (c'est-à-dire lorsque l'accumulateur est à l'état de charge complet), la matière active, qui est du soufre élémentaire, est présente à l'état solide dans l'électrode positive. Au cours de la réduction du soufre, c'est-à-dire au cours de la décharge, les molécules cycliques de soufre sont réduites et forment des chaînes linéaires de polysulfures de lithium, de formule générale Li₂Sₙ, avec n pouvant aller de 2 à 8. Puisque la molécule de départ est S₈, les premiers composés formés sont les polysulfures de lithium à chaînes longues, tels que Li₂S₈ ou Li₂S₆. Ces polysulfures de lithium étant solubles dans les électrolytes organiques, la première étape de décharge consiste donc en la solubilisation de la matière active dans l'électrolyte, et la production de polysulfures de lithium à chaînes longues en solution. Puis, au fur et à mesure que la réduction du soufre se poursuit, la longueur de chaîne des polysulfures est graduellement réduite, et des composés tels que Li₂S₅, Li₂S₄ ou encore Li₂S₂ sont formés en solution. Enfin, le produit final de réduction est le sulfure de lithium (Li₂S), qui, lui, est insoluble dans les électrolytes organiques. Ainsi, la dernière étape du mécanisme de réduction du soufre consiste en la précipitation du matériau actif soufré.

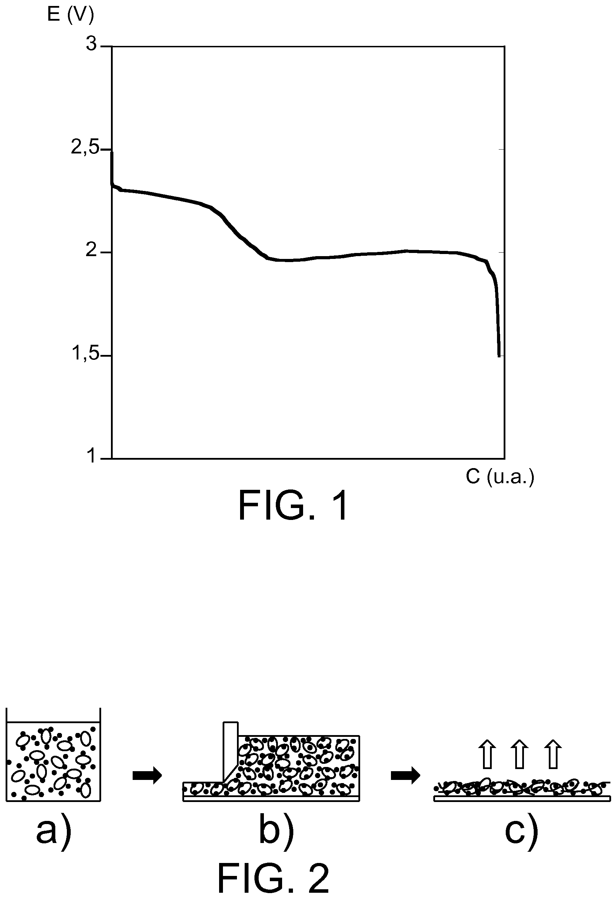

Ce mécanisme peut être corrélé au profil de décharge illustré sur la figure 1, qui représente un graphique illustrant l'évolution du potentiel E (en V) en fonction de la capacité C (en u.a).

En effet, dans ce profil, le premier plateau peut être attribué à la formation des chaînes longues de polysulfures de lithium, alors que le second plateau correspond à la réduction de la taille des chaînes soufrées, jusqu'à passivation de l'électrode positive.

Toutefois, les accumulateurs lithium-soufre présentent un certain nombre d'inconvénients.

La première limitation est d'ordre cinétique, puisque le soufre est un matériau isolant. Le soufre est également soluble dans les électrolytes organiques employés. Ainsi solubilisé, il peut contribuer à engendrer la corrosion de l'électrode négative de lithium et est responsable de l'autodécharge importante des accumulateurs lithium-soufre.

Les intermédiaires polysulfures sont également solubles dans l'électrolyte et susceptibles de réagir avec l'électrode négative. Ils favorisent donc aussi l'autodécharge de l'accumulateur. En outre, ils sont responsables de la mise en place d'un mécanisme navette qui se produit en charge, et qui entraîne la dégradation des performances de l'accumulateur, notamment en termes d'efficacité coulombique. Enfin, le produit de décharge Li₂S est, quant à lui, insoluble dans l'électrolyte et isolant électronique. Il précipite donc en fin de décharge et passive la surface des électrodes, qui deviennent alors inactives. De ce fait, les capacités pratiques obtenues peuvent être généralement très en-deçà de la capacité théorique, de l'ordre de 300 à 1000 mAh.g⁻¹ (la capacité théorique étant de l'ordre de 1675 mAh.g⁻¹).

Aussi, des améliorations sont à apporter concernant l'architecture des accumulateurs, par exemple, au niveau de l'électrode positive à base de soufre, de l'électrolyte, du séparateur et de l'électrode négative.

D'un point de vue structurel, un accumulateur lithium/soufre comprend, classiquement, au moins une cellule électrochimique comportant deux électrodes à base de matériaux différents (une électrode positive comprenant, comme matériau actif, du soufre élémentaire et une électrode négative comprenant, comme matériau actif, du lithium métallique), entre lesquelles est disposé un électrolyte liquide organique.

Concernant l'électrode positive comprenant du soufre, celle-ci est classiquement obtenue par un procédé d'enduction sur un substrat qui constitue le collecteur de courant, pour donner un ensemble formé de deux pièces constituées par le collecteur de courant et l'électrode positive en tant que telle. Plus spécifiquement, comme illustré sur la figure 2, il est réalisé, dans un premier temps, une encre comprenant un solvant, le matériau actif, un matériau carboné (pour améliorer la conductivité électronique globale de l'électrode) et un liant (Partie a) de la figure 2). L'encre est déposée, dans un deuxième temps, sur un substrat destiné à constituer le collecteur de courant, qui est, généralement, une feuille métallique (comme un feuillard en aluminium) (Partie b) de la figure 2). Après évaporation du solvant et séchage, une électrode comprenant du soufre déposée sur une collecteur de courant est ainsi obtenue (Partie c) de la figure 2), l'ensemble résultant étant ensuite incorporé dans une cellule comprenant un séparateur imprégné d'électrolyte liquide organique, une électrode négative, l'électrode négative et l'électrode positive étant disposées, de part et d'autre du séparateur. Le pourcentage de soufre dans l'électrode est généralement important, généralement de 50 à 90% et, préférentiellement supérieure à 70% en masse, de sorte à obtenir des accumulateurs à forte densité d'énergie.

Le mécanisme de décharge d'un accumulateur lithium-soufre utilisant une telle électrode positive passe tout d'abord par une étape de dissolution du matériau actif, ce qui entraîne un effondrement de la structure initiale de l'électrode poreuse en raison du pourcentage important de soufre dans l'électrode. Après dissolution du soufre, la porosité de l'électrode est telle que la structure ne peut être maintenue et s'effondre. La surface disponible d'électrode est ainsi diminuée, et des grains de matériau, ou de composite carbone/liant, peuvent être désolidarisés du support constitué par le collecteur de courant. Cet endommagement induisant ainsi une perte de surface active s'avère crucial en fin de décharge, car les espèces formées (Li₂S₂, Li₂S, ...) sont à la fois très isolantes et insolubles dans l'électrolyte organique. Par conséquent, elles précipitent à l'électrode positive et sont responsables de sa passivation progressive. Or, l'épaisseur de matière déposée étant limitée à quelques nanomètres (Li₂S isolant et donc passivant), le dépôt d'une quantité importante de matériau actif dépend donc de la surface spécifique conductrice d'électrode disponible.

De plus, le composé final de décharge Li₂S est deux fois plus volumineux que le soufre, ce qui peut également contribuer à la pulvérisation de la structure d'électrode positive en fin de décharge. En conclusion, les cycles de dissolution/précipitation du matériau actif, inhérents au mécanisme de décharge, sont donc responsables de la faible capacité pratique restituée et de la faible tenue en cyclage des accumulateurs lithium-soufre.

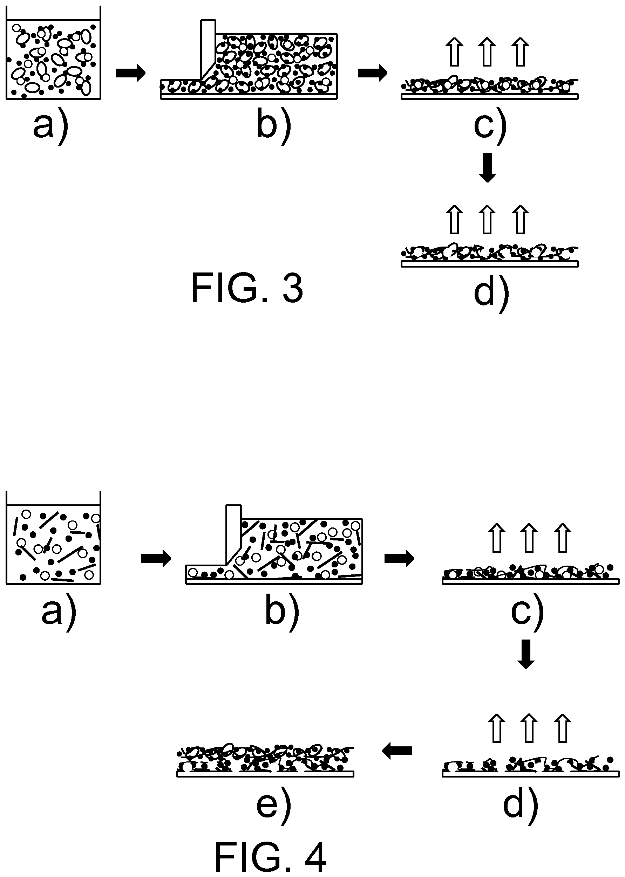

Pour essayer de surmonter ces problèmes liés à la déstructuration de l'électrode positive, il a été proposé de jouer sur la porosité desdites électrodes, de sorte à assurer une surface active adaptée pour la réaction électrochimique (par exemple, par le biais d'une microporosité) et de permettre la pénétration de l'électrolyte au sein de l'électrode et le dépôt de particules de tailles plus importantes sans phénomène de déstructuration de l'électrode et d'obturation de l'électrode (par exemple, par le biais d'une macroporosité). Ainsi, comme illustré sur la figure 3 qui illustre schématiquement des méthodes de l'art antérieur, il est préparé, dans un premier temps, une composition comprenant un matériau actif soufré, un additif carboné, un liant polymérique et un agent porogène (partie a) de la figure 3). La composition est ensuite déposée sur un substrat (partie b) de la figure 3) puis séchée (partie c) de la figure 3) et enfin, l'agent porogène est éliminé (partie d) de la figure 3). Plus spécifiquement, il est proposé, dans US 2015/0171416, de fabriquer une électrode positive par formation sur un substrat conducteur électronique d'au moins une couche d'une composition comprenant un agent liant, un matériau actif, si besoin est, et un agent porogène, suivie d'un séchage de la couche ainsi déposée et une élimination de l'agent porogène par lavage avec un solvant. Cette étape d'élimination par lavage peut entraîner toutefois une élimination partielle des autres ingrédients ainsi qu'une déstructuration de la couche déposée.

Au vu de ce qui existe, les auteurs de la présente invention se sont donc proposé de mettre au point un nouveau procédé de préparation d'une électrode positive poreuse pour accumulateur lithium-soufre, dont la formation de la porosité n'engendre pas de déstructuration et d'élimination partielle non désirée de ses ingrédients.

### EXPOSÉ DE L'INVENTION

Ainsi, l'invention a trait à un procédé de préparation d'une électrode positive poreuse déposée sur un substrat pour accumulateur lithium-soufre comprenant les étapes suivantes :
a) une étape de dépôt, sur un substrat, d'au moins une couche d'une première composition comprenant au moins un additif carboné inorganique conducteur de l'électricité, au moins un liant polymérique et au moins un agent porogène ;
b) une étape d'élimination du (des) agent(s) porogène par frittage de la ou les couches déposées ;
c) une étape de mise en contact de la ou les couches obtenues en b) avec une deuxième composition comprenant un matériau actif soufré.

En mettant en oeuvre un tel procédé, l'on s'affranchit des inconvénients liés à l'élimination du ou des agents porogènes par lavage avec un solvant organique et, en particulier, la mise en oeuvre d'un frittage pour l'élimination du ou des agents porogènes permet, de manière concomitante, d'assurer la consolidation de la couche déposée contrairement à un traitement par lavage qui contribue plutôt à déstructurer la couche déposée.

La première composition déposée sur le substrat sous forme d'une ou plusieurs couches comprend au moins un additif carboné inorganique conducteur de l'électricité, au moins un liant polymérique et au moins un agent porogène et est, donc, avantageusement, dénuée de matériau actif soufré.

Concernant les additifs carbonés inorganiques conducteurs de l'électricité, ils peuvent être choisis parmi les fibres de carbone, les poudres de carbone et les mélanges de celles-ci.

A titre d'exemples de fibres de carbone, on peut citer les fibres de carbone broyées, les fibres de carbone obtenues en phase vapeur et les mélanges de celles-ci.

Les fibres de carbone broyées peuvent présenter notamment une longueur allant de 100 µm à 1 mm.

Les fibres de carbone obtenues en phase vapeur peuvent être celles vendues sous la marque VGCF®.

Les fibres de carbone utilisées présentent, avantageusement une longueur inférieure à celle des fibres couramment utilisées dans les procédés traditionnels pour la réalisation des tissés ou non-tissés (lesquelles fibres présentent une longueur de l'ordre de quelques mm). Elles permettent de régler la tenue mécanique et assurent la percolation électronique au sein de la structure.

Les poudres de carbone peuvent, plus spécifiquement, correspondre à du noir de carbone, tel que les noirs de carbone vendus sous les marques Ketjenblack® (AzkoNobel), Vulcan® (Cabot), Super-P® (Timcal).

Les poudres de carbone et éventuellement les fibres de carbone obtenues en phase vapeur permettent d'améliorer la conductivité électronique et sont responsables de la morphologie du réseau percolant électronique.

Les liants polymériques peuvent être, par exemple :
*des liants polymériques appartenant à la catégorie des polymères hydrophiles, tels que :
   - des polymères cellulosiques, comme la carboxyméthylcellulose (connu sous l'abréviation CMC), la méthylcellulose (connu sous l'abréviation MC) ;
   - des liants appartenant à la catégorie des polymères vinyliques, tels qu'un poly(alcool vinylique) (connu sous l'abréviation PVA) ;
*des liants appartenant à la catégorie des polymères hydrophobes, tels que des polymères éthyléniques fluorés, tel que du polytétrafluoroéthylène (connu sous l'abréviation PTFE) ; et
*des mélanges de ceux-ci.

Les liants polymériques peuvent remplir plusieurs rôles :
- ils augmentent la cohésion entre les différents ingrédients de la structure et notamment les additifs carbonés ;
- dans la ou les compositions, ils permettent de régler sa viscosité.

Plus spécifiquement, lorsqu'il s'agit du PTFE, il peut jouer le rôle d'agent filmogène, et garantir la tenue mécanique de la structure finale.

Concernant l'agent porogène, on précise qu'il s'agit, plus précisément, d'un agent porogène décomposable à la chaleur, c'est-à-dire tout composé chimique qui est susceptible de perdre son intégrité structurelle sous l'effet de la chaleur (en l'occurrence, ici, la température de frittage) et ce, quel que soit le mécanisme par lequel s'effectue cette perte d'intégrité et quelle que soit la nature et la forme physique des produits auxquels elle aboutit (solides, liquides ou gazeux).

A titre d'exemples, il peut s'agir d'un composé choisi parmi :
- des composés sous forme de sels, tels que des sels chlorures (comme du chlorure de sodium, du chlorure de potassium), des sels acétates (comme de l'acétate de baryum) ;
- des composés organiques, tels que des composés azodicarbonamides (vendus notamment sous la dénomination AZB®), des composés phtalates, comme le phtalate de di-*n*-butyle.

La première composition peut comprendre, également, au moins un tensioactif (tel que ceux commercialisés sous les marques SDS®, Triton®)

Les agents tensioactifs permettent d'améliorer la dispersion des particules d'additifs carbonés inorganiques.

Une première composition spécifique peut être une composition comprenant :
- de 15% à 65 % en masse pour les fibres de carbone, le cas échéant ;
- de 15% à 65 % en masse pour les poudres de carbone ;
- de 10 à 20% en masse pour le liant polymérique, lorsqu'il s'agit d'un liant polymérique hydrophobe ;
- de 10 à 15% en masse pour le liant polymérique, lorsqu'il s'agit d'un liant polymérique hydrophile ;
- de 5 à 20% en masse pour l'agent porogène ;
- au plus 2% en masse pour l'agent tensioactif, le cas échéant ;
les pourcentages en masse étant exprimés par rapport à la masse totale des ingrédients de la première composition.

Le support sur lequel est déposée cette première composition sous forme d'une ou plusieurs couches est, avantageusement, un support collecteur de courant, par exemple, un support métallique et plus spécifiquement un support se présentant sous forme d'une feuille métallique, par exemple, en cuivre ou en aluminium.

Cette première composition peut être déposée par différentes techniques, telles que :
- le trempage-retrait (connu sous la terminologie anglaise « dip-coating ») ;
- l'enduction centrifuge (connue sous la terminologie anglaise « spin-coating ») ;
- l'enduction laminaire (connue sous la terminologie anglaise « laminar-flow-coating ou meniscus coating ») ;
- la pulvérisation ou l'épandage (connue sous la terminologie anglaise « spray-coating ») ;
- l'enduction au rouleau (connue sous la terminologie « roll to roll process ») ;
- l'enduction au pinceau (connue sous la terminologie anglaise « paint coating ») ;
- la sérigraphie (connue sous la terminologie anglaise « screen printing ») ; ou
- les techniques utilisant un couteau horizontal pour le dépôt (connue sous la terminologie anglaise « tape-coating »).

Le procédé de l'invention peut comprendre, avant la mise en oeuvre de l'étape a), une étape de préparation de la première composition, laquelle préparation comprend une opération de mise en contact des ingrédients de ladite première composition (additif(s) carboné(s) inorganique(s) conducteur(s) de l'électricité, liant(s) polymérique(s), agent(s) porogène(s) éventuellement agent(s) tensioactif(s)) suivie d'une opération de dispersion de la composition à l'aide d'un mélangeur.

Après l'étape a) et avant l'étape b), le procédé de l'invention peut comprendre une étape de séchage, en vue d'éliminer les espèces volatiles et fixer les ingrédients de la première composition sur le support. Cette étape de séchage peut être réalisée à une température allant jusqu'à 120°C, par exemple à 80°C sous air libre.

Une fois l'étape a) réalisée et l'éventuelle étape de séchage mise en oeuvre, le procédé de l'invention comprend une étape d'élimination du ou des agents porogènes par frittage de la ou les couches déposées, c'est-à-dire un traitement thermique réalisé à une température et une durée efficaces pour obtenir une consolidation des ingrédients de la première composition tout en permettant l'élimination du ou des agents porogènes par dégradation de ceux-ci.

A titre d'exemple, le frittage peut être réalisé sous air à une température supérieure d'au moins 20% à la température de fusion du ou des liants polymériques et ayant comme limite supérieure la température de fusion du substrat pendant une durée appropriée qui est fonction de la température retenue. A titre d'exemple, une température de 350°C pendant 30 minutes peut être utilisée pour le frittage d'une composition contenant un liant du type polytétrafluoroéthylène.

Une fois l'étape b) effectuée, la porosité résultante doit être avantageusement maintenue pour accueillir la deuxième composition au cours de l'étape c). Aussi, entre l'étape b) et l'étape c), le procédé ne comprend pas, avantageusement, d'étape de diminution de la porosité résultant de la mise en oeuvre de l'étape b), telle qu'une étape de calandrage.

Après l'étape b), le procédé comprend une étape de mise en contact de la ou les couches obtenues en b) avec une deuxième composition comprenant un matériau actif soufré.

Cette étape peut intervenir directement après l'étape b) et avant mise en place de l'électrode dans un accumulateur lithium-soufre (dite première variante) ou peut être mise en oeuvre après incorporation de l'électrode dans un accumulateur lithium-soufre et mise en fonctionnement de celui-ci (dite deuxième variante), auquel cas la deuxième composition correspondra à l'électrolyte comprenant, en outre, le matériau actif soufré.

Selon la première variante, la deuxième composition comprend un matériau actif soufré et peut comprendre, en outre, au moins un additif carboné inorganique conducteur de l'électricité et au moins un liant polymérique.

Le matériau actif soufré peut être du soufre élémentaire (Ss) ou du disulfure de lithium (Li₂S), lequel matériau actif soufré peut être présent, dans la deuxième composition, à une teneur allant de 50 à 85 % en masse par rapport à la masse totale de la deuxième composition, par exemple, une teneur de 80%.

L'additif carboné inorganique conducteur de l'électricité peut être une poudre de noir de carbone, qui peut être présente, dans la deuxième composition, à une teneur allant de 10 à 20% en masse par rapport à la masse totale de la composition, par exemple, une teneur de 10%.

Quant au liant, il peut être choisi parmi les liants polymériques appartenant à la catégorie des polymères cellulosiques, tels que de la carboxyméthylcellulose (connu sous l'abréviation CMC), de la méthylcellulose (connu sous l'abréviation MC).

Celui-ci peut être présent à une teneur allant de 10 à 20% en masse par rapport à la masse totale de la deuxième composition, par exemple, une teneur de 10%.

La deuxième composition peut être déposée selon l'une des techniques mentionnées plus haut au sujet de la première composition.

Une fois l'étape c) mise en oeuvre, le procédé de l'invention peut être soumis à une étape de séchage, en vue d'éliminer les espèces volatiles et fixer les ingrédients de la deuxième composition. Cette étape de séchage peut être réalisée à une température compatible avec le matériau actif soufré, tel que du soufre élémentaire, par exemple, allant de température ambiante à 100°C et plus spécifiquement, une température de 80°C à l'air libre.

Selon la deuxième variante, la deuxième composition correspond à un électrolyte utilisé dans l'accumulateur lithium-soufre, lequel électrolyte comprenant, entre autres, le matériau actif soufré, ce qui correspond à un accumulateur fonctionnant selon une configuration du type catholyte. Le matériau actif soufré est, avantageusement, un composé polysulfure de lithium de formule Li₂Sₙ avec n étant un entier allant de 2 à 8.

Ce composé constitue ainsi la source de soufre pour l'électrode positive.

Dans ce cas, la quantité de composé polysulfure de lithium introduite dans l'électrolyte est adaptée en fonction de la surface spécifique du produit issu de l'étape b) du procédé de l'invention, celle-ci dictant la quantité de matériau actif qu'il est possible de déposer. Par exemple, le composé polysulfure de lithium peut être dissous dans l'électrolyte à une concentration allant de 0,25 mol.L⁻¹ à la concentration de saturation.

En outre, l'électrolyte faisant office de deuxième composition comprend, classiquement, au moins un solvant organique et au moins un sel de lithium.

Le ou les solvants organiques peuvent être, par exemple, un solvant comportant une ou plusieurs fonctions éther, nitrile, sulfone et/ou carbonate avec, par exemple, une chaîne carbonée pouvant comporter de 1 à 10 atomes de carbone.

A titre d'exemples de solvants comportant une fonction carbonate, on peut citer :
- des solvants carbonates cycliques, tel que le carbonate d'éthylène (symbolisé par l'abréviation EC), le carbone de propylène (symbolisé par l'abréviation PC) ;
- des solvants carbonates linéaires, tels que le carbonate de diéthyle (symbolisé par l'abréviation DEC), le carbonate de diméthyle (symbolisé par l'abréviation DMC), le carbonate d'éthylméthyle (symbolisé par l'abréviation EMC).

A titre d'exemple de solvants comportant une fonction éther, on peut citer les solvants éthers, tels que le 1,3-dioxolane (symbolisé par l'abréviation DIOX), le tétrahydrofurane (symbolisé par l'abréviation THF), le 1,2-diméthoxyéthane (symbolisé par l'abréviation DME), ou un éther de formule générale CH₃O-[CH₂CH₂O]ₙ-OCH₃ (n étant un entier allant de 1 et 10), tel que le diméthyléther de tétraéthylèneglycol (symbolisé par l'abréviation TEGDME) et les mélanges de ceux-ci.

De préférence, le solvant organique est un solvant éther ou un mélange de solvants éthers.

Le sel de lithium peut être choisi dans le groupe constitué par LiPF₆, LiClO₄, LiBF₄, LiAsF₆, Lil, LiNO₃ LiR_{f}SO₃ (avec R_{f} correspondant à un groupe perfluoroalkyle comprenant de 1 à 8 atomes de carbone), LiN(CF₃SO₂)₂ (appelé également bis[(trifluorométhyl)sulfonyl]imidure de lithium correspondant à l'abréviation LiTFSI), LiN(C₂F₅SO₂)₂ (appelé également bis[(perfluoroéthyl)sulfonyl]imidure de lithium correspondant à l'abréviation LiBETI), LiCH₃SO₃, LiB(C₂O₄)₂ (appelé également bis(oxalato)borate de lithium ou LiBOB) et les mélanges de ceux-ci, la préférence portant sur un mélange LiTFSI/LiNO₃.

Le sel de lithium peut être présent, dans l'électrolyte, selon une concentration allant de 0,25 M à 2 M, par exemple, 1M.

A titre d'exemple, la figure 4 illustre un mode de réalisation du procédé de l'invention sur laquelle :
- la partie a) de la figure illustre la préparation d'une première composition comprenant un additif carboné inorganique, un liant polymérique, un agent porogène ;
- la partie b) de la figure illustre le dépôt sur un substrat de la première composition ;
- la partie c) de la figure illustre l'étape de séchage de la première composition ;
- la partie d) de la figure illustre l'étape d'élimination de l'agent porogène ; et
- la partie e) de la figure illustre l'étape de mise en contact avec une deuxième composition comprenant le matériau actif soufré.

Les électrodes positives déposées sur un substrat obtenues selon le procédé de l'invention sont des structures, de par les ingrédients qu'elles contiennent, aptes à remplir à la fois le rôle d'électrode positive et le rôle de collecteur de courant.

Les électrodes positives selon le procédé de l'invention sont destinées à être assemblées dans un accumulateur lithium-soufre comprenant au moins une cellule comprenant :
- une électrode positive obtenue selon le procédé de l'invention telle que définie ci-dessus ;
- une électrode négative ; et
- un électrolyte conducteur d'ions lithium disposé entre ladite structure et ladite électrode négative.

Nous précisons les définitions suivantes.

Par électrode positive, on entend, classiquement, dans ce qui précède et ce qui suit, l'électrode qui fait office de cathode, quand l'accumulateur débite du courant (c'est-à-dire lorsqu'il est en processus de décharge) et qui fait office d'anode lorsque l'accumulateur est en processus de charge.

Par électrode négative, on entend, classiquement, dans ce qui précède et ce qui suit, l'électrode qui fait office d'anode, quand l'accumulateur débite du courant (c'est-à-dire lorsqu'il est en processus de décharge) et qui fait office de cathode, lorsque l'accumulateur est en processus de charge.

L'électrode négative peut être autosupportée (c'est-à-dire ne nécessitant pas d'être apposée à un support, tel qu'un support collecteur de courant) ou peut comprendre, de préférence, un substrat collecteur de courant sur lequel est placé au moins le matériau actif de l'électrode négative, ce matériau actif pouvant être avantageusement du lithium métallique.

Le substrat collecteur de courant peut être en un matériau métallique (composé d'un seul élément métallique ou d'un alliage d'un élément métallique avec un autre élément), se présentant, par exemple, sous forme d'une plaque ou feuillard, un exemple spécifique d'un substrat collecteur en courant pouvant être une plaque en inox ou en cuivre. Le substrat collecteur de courant peut être également en un matériau carboné.

L'électrolyte est un électrolyte conducteur d'ions lithium, cet électrolyte pouvant être, en particulier, un électrolyte liquide comprenant au moins un solvant organique et au moins un sel de lithium, tels que définis ci-dessus.

En outre, lorsque l'accumulateur fonctionne selon une configuration de catholyte, l'électrolyte peut comprendre au moins un composé polysulfure de lithium de formule Li₂Sₙ avec n étant un entier allant de 2 à 8, tel que défini ci-dessus.

Dans les accumulateurs lithium-soufre, l'électrolyte liquide susmentionné peut être amené, dans les cellules électrochimiques des accumulateurs lithium-soufre, à imprégner un séparateur, lequel est disposé entre l'électrode positive et l'électrode négative de la cellule électrochimique.

Ce séparateur peut être en un matériau poreux, tel qu'un matériau polymérique, apte à accueillir dans sa porosité l'électrolyte liquide.

L'électrolyte peut être également un électrolyte gélifié, ce qui correspond, dans ce cas, à un électrolyte comprenant un solvant organique et un sel de lithium, similaires à ceux décrits ci-dessus, qui imprègne une matrice poreuse qui gonfle en absorbant l'électrolyte, une telle matrice pouvant être un polyoxyde d'éthylène (connu sous l'abréviation POE), un polyacrylonitrile (connu sous l'abréviation PAN), un polyméthacrylate de méthyle (connu sous l'abréviation PMMA), un polyfluorure de vinylidène (connu sous l'abréviation PVDF) et leurs dérivés.

L'invention va, à présent, être décrite en référence aux modes de réalisation particuliers définis ci-dessous en référence aux figures annexées.

### BRÈVE DESCRIPTION DES FIGURES

La figure 1 est un graphique illustrant l'évolution du potentiel E (en V) en fonction de la capacité C (en u.a).
La figure 2 est un schéma de procédé illustrant la préparation d'une électrode positive conformément à l'état de l'art.
La figure 3 est un schéma de procédé illustrant un autre mode de préparation d'une électrode positive conformément à l'état de l'art.
La figure 4 est un schéma de procédé illustrant un mode de préparation d'une électrode positive conformément au procédé de l'invention.

### EXPOSÉ DÉTAILLÉ DE MODES DE RÉALISATION PARTICULIERS

### Exemple 1

Le présent exemple illustre la préparation d'une électrode positive obtenue selon le procédé conforme à l'invention.

Pour ce faire, une feuille d'aluminium faisant office de collecteur de courant est enduite avec une première composition comprenant les ingrédients suivants :
- 0,75 g d'une poudre de noir de carbone Vulcan® (soit 35,61% en masse sèche après frittage) ;
- 0,75 g de fibre de carbones obtenues en phase vapeur VGCF® (soit 35,61% en masse sèche après frittage) ;
- 0,2 g d'un composé azodicarbonamide AZB® (0% en masse sèche après frittage) ;
- 0,28 g d'un tensioactif Triton X-100 (0% en masse sèche après frittage) ; et
- 0,25 g de polytétrafluoroéthylène (PTFE) (21,58% en masse sèche après frittage) ;
- 0,25 g de carboxyméthylcellulose (CMC) (7,19% en masse sèche après frittage).

L'extrait sec (à savoir le pourcentage massique de produit sec dans la composition) est de 10,63 %.

La composition ainsi enduite est soumise à un frittage à 350°C pendant 30 minutes.

Le produit résultant est ensuite enduit à l'aide d'une racle avec une deuxième composition comprenant :
- 8 g de soufre élémentaire (79,92% en masse sèche) ;
- 1 g de Super P® (9,99 % en masse sèche) ; et
- 50 g de carboxyméthylcellulose (10,09% en masse sèche).

L'ensemble est ensuite séché à 80°C à l'air libre pendant 10 minutes.

Il en résulte une électrode présentant un grammage en carbone de 8,480 mg/cm² d'électrode et un grammage en soufre de 2,845 mg/cm² d'électrode.

### EXEMPLE COMPARATIF 1

Le présent exemple illustre la préparation d'une électrode positive obtenue selon un procédé non conforme à l'invention.

Pour ce faire, une feuille d'aluminium faisant office de collecteur de courant est enduite avec une composition comprenant les ingrédients suivants :
- 8 g de soufre élémentaire (79,92% en masse sèche) ;
- 1 g de Super P® (9,99 % en masse sèche) ; et
- 50 g de carboxyméthylcellulose (10,09% en masse sèche).

L'ensemble est ensuite séché à 55°C à l'air libre pendant 1 heure.

Il en résulte une électrode présentant un grammage en soufre de 2,77 mg/cm² d'électrode.

### EXEMPLE 2

Dans cet exemple, les électrodes positives obtenues dans les exemples précédents ont été testées dans des piles, afin de déterminer les capacités massiques en décharge.

Les piles mises en oeuvre sont des piles boutons conçues de la manière suivante.

Des disques de 14 mm de diamètre ont été découpés dans les électrodes positives obtenues aux exemples 1 et comparatif 1 décrits ci-dessus, et séchés sous vide (20 torr) à 80°C pendant 48 heures. Ensuite, ils ont été intégrés, en tant qu'électrode positive, dans un accumulateur de type "pile bouton" (CR2032) ainsi construit :
- une électrode négative de lithium de 130 µm d'épaisseur, découpée au diamètre 16 mm et déposée sur un disque d'inox servant de collecteur de courant ;
- une électrode positive déposée sur un collecteur en aluminium ;
- un séparateur Celgard® 2400, imbibés d'un électrolyte liquide à base du sel LiTFSI (1 mol.L⁻¹), LiNO₃ (0,1 mol.L⁻¹) en solution dans un mélange 50/50 en volume de TEGDME (tétraéthylène glycol diméthyléther) - DIOX (Dioxolane).

Les piles obtenues ont été soumises à des tests de cyclage galvanostatique à C/20 pour déterminer les capacités massiques de décharge par gramme de soufre après le 5^{ème} cycle, les résultats obtenus figurant dans le tableau ci-dessous.

| Electrode positive | Capacité de décharge-5^{ème} Cycle (mAh/g) |
|---|---|
| Exemple 1 | 682,4 |
| Exemple comparatif 1 | 300 |

Il ressort que la capacité massique de décharge des électrodes positives préparées conformément au procédé de l'invention a plus que doublé par rapport à la capacité massique de décharge de l'électrode positive de l'exemple comparatif 1.

## Revendications

1. Procédé de préparation d'une électrode positive poreuse déposée sur un substrat pour accumulateur lithium-soufre comprenant les étapes suivantes :
a) une étape de dépôt, sur un substrat, d'au moins une couche d'une première composition comprenant au moins un additif carboné inorganique conducteur de l'électricité, au moins un liant polymérique et au moins un agent porogène ;
b) une étape d'élimination du (des) agent(s) porogène par frittage de la ou les couches déposées ;
c) une étape de mise en contact de la ou les couches obtenues en b) avec une deuxième composition comprenant un matériau actif soufré.

2. Procédé selon la revendication 1, dans lequel le ou les additifs carbonés inorganiques conducteurs de l'électricité sont choisis parmi les fibres de carbone, les poudres de carbone et les mélanges de celles-ci.

3. Procédé selon la revendication 1 ou 2, dans lequel le ou les liants polymériques sont choisis parmi :
*des liants polymériques appartenant à la catégorie des polymères hydrophiles, tels que :
- des polymères cellulosiques, comme la carboxyméthylcellulose, la méthylcellulose;
- des liants appartenant à la catégorie des polymères vinyliques, tels qu'un poly(alcool vinylique) ;
*des liants appartenant à la catégorie des polymères hydrophobes, tels que des polymères éthyléniques fluorés, tel que du polytétrafluoroéthylène (connu sous l'abréviation PTFE) ; et
*des mélanges de ceux-ci.

4. Procédé selon l'une quelconque des revendications précédentes, dans lequel le ou les agents porogènes sont choisis parmi :
- des composés sous forme de sels, tels que des sels chlorures (comme du chlorure de sodium, du chlorure de potassium), des sels acétates (comme de l'acétate de baryum) ;
- des composés organiques, tels que des composés azodicarbonamides, des composés phtalates.

5. Procédé selon l'une quelconque des revendications précédentes, dans lequel le support est un support collecteur de courant.

6. Procédé selon l'une quelconque des revendications précédentes, dans lequel le support est un support métallique.

7. Procédé selon l'une quelconque des revendications précédentes, dans lequel l'étape c) intervient directement après l'étape b) et avant mise en place de l'électrode dans un accumulateur lithium-soufre (dite première variante) ou est mis en oeuvre après incorporation de l'électrode dans un accumulateur lithium-soufre et mise en fonctionnement de celui-ci.

8. Procédé selon la revendication 7, dans lequel, selon la première variante, la deuxième composition comprend, en outre, au moins un additif carboné inorganique conducteur de l'électricité et au moins un liant polymérique.

9. Procédé selon la revendication 8, dans lequel le matériau actif soufré est du soufre élémentaire (Ss) ou du disulfure de lithium (Li₂S).

10. Procédé selon la revendication 7, dans lequel, selon la deuxième variante, la deuxième composition correspond à un électrolyte utilisé dans un accumulateur lithium-soufre.

11. Procédé selon la revendication 10, dans lequel le matériau actif soufré est un composé polysulfure de lithium de formule Li₂Sₙ avec n étant un entier allant de 2 à 8.

12. Procédé selon la revendication 10 ou 11, dans lequel la deuxième composition comprend, en outre, au moins un solvant organique et au moins un sel de lithium.

13. Procédé selon l'une quelconque des revendications précédentes, dans lequel la première composition est dénuée de matériau actif soufré.

## Patentansprüche

1. Verfahren zur Herstellung einer auf einem Substrat positionierten porösen positiven Elektrode für eine Lithium-Schwefel-Batterie, welches die folgenden Schritte umfasst:
a) einen Schritt der Positionierung wenigstens einer Schicht einer ersten Zusammensetzung auf einem Substrat, welche wenigstens einen elektrisch leitenden anorganischen Kohlenstoffzusatz, wenigstens ein polymeres Bindemittel und wenigstens einen Porenbildner umfasst;
b) einen Schritt der Eliminierung des/der Porenbildner/s durch Sintern der aufgebrachten Schicht/en;
c) einen Schritt des In-Kontakt-Bringens der in b) erhaltenen Schicht/en mit einer zweiten Zusammensetzung, welche ein aktives Schwefelmaterial umfasst.

2. Verfahren nach Anspruch 1, bei welchem der oder die elektrisch leitenden inorganischen Kohlenstoffzusätze gewählt sind aus Karbonfasern, Karbonpulvern und Mischungen daraus.

3. Verfahren nach Anspruch 1 oder 2, bei welchem der oder die polymeren Bindemittel gewählt sind aus:
*polymere Bindemittel der Kategorie der hydrophilen Polymere, wie zum Beispiel:
- Cellulosepolymere wie Carboxymethylcellulose, Methylcellulose;
- Bindemittel der Kategorie der Vinylpolymere, wie beispielsweise Polyvinylalkohol;
*Bindemittel der Kategorie der hydrophoben Polymere, wie zum Beispiel fluorhaltige Ethylenpolymere, wie zum Beispiel Polytetrafluorethylen (bekannt unter der Abkürzung PTFE); und
*Mischungen daraus.

4. Verfahren nach einem der vorhergehenden Ansprüche, bei welchem der oder die Porenbildner gewählt sind aus:
- Verbindungen in Form von Salzen, wie beispielsweise Chloridsalze (wie Natriumchlorid, Kaliumchlorid), Azetatsalze (wie Bariumazetat);
- organische Verbindungen, wie beispielsweise Azodicarbonamide, Phtalatverbindungen.

5. Verfahren nach einem der vorhergehenden Ansprüche, bei welchem der Träger ein Stromabnehmer-Träger ist.

6. Verfahren nach einem der vorhergehenden Ansprüche, bei welchem der Träger ein Metallträger ist.

7. Verfahren nach einem der vorhergehenden Ansprüche, bei welchem Schritt c) direkt auf Schritt b) folgt und vor der Positionierung der Elektrode in einer Lithium-Schwefel-Batterie (als erste Variante bezeichnet) erfolgt, oder nach der Einbringung der Elektrode in eine Lithium-Schwefel-Batterie und Inbetriebnahme derselben realisiert wird.

8. Verfahren nach Anspruch 7, bei welchem gemäß der ersten Variante, die zweite Zusammensetzung ferner wenigstens einen elektrisch leitenden anorganischen Kohlenstoffzusatz und wenigstens ein polymeres Bindemittel umfasst.

9. Verfahren nach Anspruch 8, bei welchem das aktive Schwefelmaterial elementarer Schwefel (Ss) oder Lithiumdisulfid (Li₂S) ist.

10. Verfahren nach Anspruch 7, bei welchem gemäß der zweiten Variante die zweite Zusammensetzung einem in einer Lithium-Schwefel-Batterie verwendeten Elektrolyt entspricht.

11. Verfahren nach Anspruch 10, bei welchem das aktive Schwefelmaterial eine Lithiumpolysulfid-Zusammensetzung mit der Formel Li₂Sₙ ist, wobei n für eine ganze Zahl zwischen 2 und 8 steht.

12. Verfahren nach Anspruch 10 oder 11, bei welchem die zweite Zusammensetzung ferner wenigstens ein organisches Lösungsmittel und wenigstens ein Lithiumsalz umfasst.

13. Verfahren nach einem der vorhergehenden Ansprüche, bei welchem die erste Zusammensetzung kein aktives Schwefelmaterial umfasst.

## Claims

1. Preparation method for a porous positive electrode deposited on a substrate for a lithium-sulphur battery, comprising the following steps:
a) a step for the deposition onto a substrate of at least one layer of a first composition comprising at least one electrically-conductive inorganic carbon-containing additive, at least one polymer binder and at least one pore-forming agent;
b) a step for the removal of the pore-forming agent(s) by sintering of the deposited layer or layers;
c) a step for bringing the layers obtained in b) into contact with a second composition comprising a sulphur-containing active material.

2. Method according to claim 1 wherein the electrically-conductive inorganic carbon-containing additive or additives are chosen from amongst carbon fibres, carbon powders and mixtures of these.

3. Method according to claim 1 or 2 wherein the polymer binder or binders are chosen from:
*polymer binders belonging to the category of hydrophilic polymers, such as:
- cellulosic polymers, such as carboxymethylcellulose, methylcellulose;
- binders belonging to the vinyl polymer category, such as poly(vinyl alcohol);
*binders belonging to the hydrophobic polymer category, such as fluorinated ethylene polymers, such as polytetrafluoroethylene (known by the abbreviation PTFE); and
*mixtures of these.

4. Method according to any whatsoever of the preceding claims, wherein the pore-forming agents are chosen from:
- compounds in the form of salts, such as chloride salts (such as sodium chloride, potassium chloride), acetate salts (such as barium acetate);
- organic compounds, such as azodicarbonamide compounds, phthalate compounds.

5. Method according to any whatsoever of the preceding claims, wherein the support is a current collector support.

6. Method according to any whatsoever of the preceding claims, wherein the support is a metallic support.

7. Method according to any whatsoever of the preceding claims wherein the step c) occurs directly after step b) and before the electrode is put in place in a lithium-sulphur battery (so-called first alternative) or is put in place after incorporation of the electrode in a lithium sulphur battery and operation of the latter.

8. Method according to claim 7 wherein, according to the first alternative, the second composition moreover comprises at least one electrically-conductive inorganic carbon-containing additive and at least one polymer binder.

9. Method according to claim 8 wherein the sulphur-containing active material is elemental sulphur (S₈) or lithium disulphide (Li₂S).

10. Method according to claim 7 wherein, according to the second alternative, the second composition corresponds to an electrolyte used in a lithium-sulphur battery.

11. Method according to claim 10 wherein the sulphur-containing active material is a lithium polysulphide compound of formula Li₂Sₙ where n is an integer from 2 to 8.

12. Method according to claim 10 or 11, wherein the second composition moreover comprises at least one organic solvent and at least one lithium salt.

13. Method according to any whatsoever of the preceding claims, wherein the first composition is devoid of sulphur-containing active material.
